# EUROPEAN PATENT SPECIFICATION

(11) **EP 3 592 062 B1**
(45) Date of publication and mention of the grant of the patent: **27.09.2023**
(21) Application number: 17901373.5
(22) Date of filing: 24.03.2017
(51) Int. Cl.: H04W 72/02

(54) **SIGNAL PROCESSING METHOD AND APPARATUS**
SIGNALVERARBEITUNGSVERFAHREN UND -VORRICHTUNG
PROCÉDÉ ET APPAREIL DE TRAITEMENT DU SIGNAL

(43) Date of publication of application: 08.01.2020
(73) Proprietor: Huawei Technologies Co., Ltd., Longgang District Shenzhen, Guangdong 518129 (CN)
(72) Inventor: CAI, Yu, Shenzhen Guangdong 518129 (CN); ZENG, Yongbo, Shenzhen Guangdong 518129 (CN); WANG, Jian, Shenzhen Guangdong 518129 (CN)
(74) Representative: Maiwald GmbH
(86) International application number: PCT/CN2017/078187
(87) International publication number: WO 2018/170920

(56) References cited:
- WO-A1-2015/069051
- WO-A1-2017/011987
- CN-A- 103 053 199
- CN-A- 105 101 430
- ALCATEL-LUCENT ET AL: "On Prose UE-to-Network Relay discovery", 3GPP DRAFT; S2-151812 WAS S2-151777 WAS 1656 ON RELAY DISCOVERY V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. SA WG2, no. Fukuoka, Japan; 20150525 - 20150529 29 May 2015 (2015-05-29), XP050981183, Retrieved from the Internet: URL:http://www.3gpp.org/ftp/tsg_sa/WG2_Arc h/TSGS2_109_Fukuoka/Docs/ [retrieved on 2015-05-29]
- HUAWEI ET AL: "Resource allocation for UE-to-Network relay", 3GPP DRAFT; R1-151279, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Belgrade, Serbia; 20150420 - 20150424 19 April 2015 (2015-04-19), XP050934159, Retrieved from the Internet: URL:http://www.3gpp.org/ftp/Meetings_3GPP_ SYNC/RAN1/Docs/ [retrieved on 2015-04-19]

## Description

### TECHNICAL FIELD

This application relates to wireless communications technologies, and in particular, to a signal processing method and apparatus.

### BACKGROUND

Device-to-device (D2D) communication based on a cellular network, or referred to as a proximity service (ProSe), is a new technology in which devices are allowed to perform direct communication by multiplexing a cell resource under control of a system. In the D2D communication, spectrum efficiency in a cellular communications system can be improved, so that a problem of a lack of spectrum resources in a wireless communications system is resolved to some extent.

The D2D communication includes a relay operation from user equipment (UE) to a network. In other words, remote UE can be connected to the network by using relay UE. The remote UE can discover the relay UE by using a sidelink discovery message. The remote UE may further establish a connection to the relay UE. However, in a discovery process and a connection establishment process, power consumption of the remote UE is relatively high.
The article by Alcatel-Lucent et al: "On Prose UE-to-Network Relay discovery", S2-151812, XP050981183, 29 May 2015, refers to a discovery mechanism of a relay. The article by Huawei et al: "Resource allocation for UE-to-Network relay", R1-151279, XP050934159, 19 April 2015 refers to a Resource allocation for UE-to-Network relay.

### SUMMARY

This application provides a signal processing method and apparatus, to reduce power consumption of remote UE. The present application is defined in the appended independent claims. Further implementations are disclosed in the pending dependent claims. In the following, implementations not falling within the scope of the claims are to be understood as examples useful for understanding the application. According to a first aspect, this application provides a signal processing method. In the method, first user equipment receives a first message, and determines, based on the first message, a first resource used by second user equipment to send a second message, and then the first user equipment processes the second message by using the first resource, where the processing includes at least one of detection and receiving. In the signal processing method, the first user equipment determines, based on the first message, the first resource used by the second user equipment to send the second message, and detects and/or receives the second message on the first resource, so as to avoid excessively high power consumption caused when the first user equipment detects and/or receives the second message on many resources, thereby reducing power consumption of the first user equipment.

The first aspect, that the first user equipment determines, based on the first message, a first resource used by second user equipment to send a second message includes: determining, by the first user equipment based on a second resource used for the first message, the first resource used by the second user equipment to send the second message.

In a possible design of the first aspect, the first message includes indication information, and the indication information is used to determine the first resource used by the second user equipment to send the second message. In this case, that the first user equipment determines, based on the first message, a first resource used by second user equipment to send a second message may include: determining, by the first user equipment, the first resource based on the indication information.

In a possible design of the first aspect, the determining, by the first user equipment based on a second resource used for the first message, the first resource used by the second user equipment to send the second message may include: determining, by the first user equipment based on a third message sent by the first user equipment and the second resource used for the first message, the first resource used by the second user equipment to send the second message.

In a possible design of the first aspect, the third message may include an identifier of the first user equipment. The determining, by the first user equipment based on a third message sent by the first user equipment and the second resource used for the first message, the first resource used by the second user equipment to send the second message may include: determining, by the first user equipment based on the identifier of the first user equipment and the second resource used for the first message, the first resource used by the second user equipment to send the second message.

In a possible design of the first aspect, the determining, by the first user equipment based on a third message sent by the first user equipment and the second resource used for the first message, the first resource used by the second user equipment to send the second message may include: determining, by the first user equipment based on the second resource used for the first message and a third resource used by the first user equipment to send the third message, the first resource used by the second user equipment to send the second message.

In a possible design of the first aspect, the determining, by the first user equipment, the first resource based on the indication information may include: determining, by the first user equipment based on a third message sent by the first user equipment and the indication information, the first resource used by the second user equipment to send the second message.

In a possible design of the first aspect, the third message may include an identifier of the first user equipment. The determining, by the first user equipment based on a third message sent by the first user equipment and the indication information, the first resource used by the second user equipment to send the second message may include: determining, by the first user equipment based on the identifier of the first user equipment and the indication information, the first resource used by the second user equipment to send the second message.

In a possible design of the first aspect, the determining, by the first user equipment based on a third message sent by the first user equipment and the indication information, the first resource used by the second user equipment to send the second message may include: determining, by the first user equipment based on the indication information and a third resource that is used by the first user equipment to send the third message, the first resource used by the second user equipment to send the second message.

In a possible design of the first aspect, the first message may include indication information, and the indication information is used to determine the first resource used by the second user equipment to send the second message. In this implementation, that the first user equipment determines, based on the first message, a first resource used by second user equipment to send a second message may include: determining, by the first user equipment, the first resource based on an identifier of the second user equipment and the indication information.

In a possible design of the first aspect, that the first user equipment determines, based on the first message, a first resource used by second user equipment to send a second message may include: determining, by the first user equipment, an identifier of the second user equipment based on the first message; and determining, based on the identifier of the second user equipment, the first resource used by the second user equipment to send the second message. The first user equipment receives the first message sent by the second user equipment, and the first message may include the identifier of the second user equipment. The first user equipment determines, based on the identifier of the second user equipment, the first resource used by the second user equipment to send the second message.

In a possible design of the first aspect, that the first user equipment determines, based on the first message, a first resource used by second user equipment to send a second message may include: determining, by the first user equipment based on the first message and a user equipment (the first user equipment and/or the second user equipment) identifier, the first resource used by the second user equipment to send the second message.

In a possible design of the first aspect, an identifier of the second user equipment may be determined by the first user equipment based on the first message or a fourth message sent by the second user equipment.

In a possible design of the first aspect, an identifier of the first user equipment may be determined by the second user equipment based on a fifth message. The fifth message is sent by the first user equipment to the second user equipment. Further, the second user equipment determines, based on the identifier of the first user equipment, the first resource used by the second user equipment to send the second message.

In a possible design of the first aspect, that the first user equipment determines, based on the first message, a first resource used by second user equipment to send a second message may include: determining, by the first user equipment based on the user equipment identifier and the second resource used for the first message, the first resource used by the second user equipment to send the second message. For example, that the first resource is a subband is used as an example. The first user equipment determines, based on a subband used for the first message, that there may be M subbands used by the second user equipment to send the second message. The first user equipment determines, based on the user equipment identifier, that a subband used by the second user equipment to send the second message is one of the M subbands.

In a possible design of the first aspect, that the first user equipment determines, based on the first message, a first resource used by second user equipment to send a second message may include: determining, by the first user equipment based on indication information included in the first message and the user equipment identifier, the first resource used by the second user equipment to send the second message. For example, that the first resource is a subband is used as an example. The first user equipment determines, based on the indication information, that there may be M subbands used for the second message, where M is an integer greater than or equal to 1. The first user equipment determines, based on the user equipment identifier, that a subband used by the second user equipment to send the second message is one of the M subbands.

In a possible design of the first aspect, after the first user equipment receives the first message, the signal processing method may further include: sending, by the first user equipment, a sidelink message to the second user equipment.

According to a second aspect, this application provides a signal processing apparatus, and the signal processing apparatus is first user equipment. The signal processing apparatus includes a receiving module, a determining module, and a processing module. The receiving module is configured to receive a first message. The determining module is configured to determine, based on the first message, a first resource used by second user equipment to send a second message. The processing module is configured to process the second message by using the first resource. The processing includes at least one of detection and receiving. In the signal processing apparatus, the first user equipment determines, based on the first message, the first resource used by the second user equipment to send the second message, and detects and/or receives the second message on the first resource, so as to avoid excessively high power consumption caused when the first user equipment detects and/or receives the second message on many resources, thereby reducing power consumption of the first user equipment.

In the second aspect, the determining module is specifically configured to determine, based on a second resource used for the first message, the first resource used by the second user equipment to send the second message.

In a possible design of the second aspect, the first message may include indication information, and the indication information is used to determine the first resource used by the second user equipment to send the second message. In this case, the determining module may be specifically configured to determine the first resource based on the indication information.

In a possible design of the second aspect, when determining, based on the second resource used for the first message, the first resource used by the second user equipment to send the second message, the determining module may be specifically configured to determine, based on a third message sent by the first user equipment and the second resource used for the first message, the first resource used by the second user equipment to send the second message.

In a possible design of the second aspect, when determining the first resource based on the indication information, the determining module may be specifically configured to determine, based on a third message sent by the first user equipment and the indication information, the first resource used by the second user equipment to send the second message.

In a possible design of the second aspect, the signal processing apparatus may further include a sending module, configured to send a sidelink message to the second user equipment after the receiving module receives the first message.

For the first aspect and the second aspect, in a possible design, the third message may be a sidelink message and/or SCI corresponding to the sidelink message. The sidelink message may be a sidelink discovery message or a sidelink communication message.

In a possible design, the second resource may be any one or more of a subband, a PRB, a subframe, and a resource pool. The first resource corresponds to the second resource and is one or more of a subband, a PRB, a subframe, and a resource pool.

In a possible design, the first message may be a sidelink discovery message or first synchronization information. The first synchronization information may be a synchronization signal and/or a MIB-SL.

In a possible design, the second message may be any one or more of second synchronization information, a sidelink message, and SCI corresponding to the sidelink message. The second synchronization information may be a synchronization signal and/or a MIB-SL. The sidelink message may be a sidelink discovery message or a sidelink communication message.

In a possible design, the first message may be sent by the second user equipment or third user equipment.

According to a third aspect, this application provides user equipment, and the user equipment has functions of implementing the first user equipment in the foregoing method design. These functions may be implemented by using hardware, or may be implemented by hardware by executing corresponding software. The hardware or software includes one or more modules corresponding to the foregoing functions.

According to a fourth aspect, this application provides user equipment, and the user equipment includes a memory and a processor. The memory is configured to store a program instruction, and the processor is configured to invoke the program instruction in the memory to implement the method in the first aspect and the implementations of the first aspect.

According to a fifth aspect, an embodiment of this application provides a program. When being executed by a processor, the program is used to perform the method in the first aspect.

According to a sixth aspect, an embodiment of this application provides a program product, including the program in the third aspect.

According to a seventh aspect, an embodiment of this application provides a computer readable storage medium. The computer readable storage medium stores an instruction. When the instruction runs on a computer, the computer is enabled to perform the method in the first aspect.

### DESCRIPTION OF DRAWINGS

FIG. 1 shows a network architecture applicable to embodiments of this application;
FIG. 2 is a schematic flowchart of Embodiment 1 of a signal processing method according to this application;
FIG. 3 is an example diagram of a resource location in a signal processing method according to this application;
FIG. 4 is an example diagram of another resource location in a signal processing method according to this application;
FIG. 5 is an example diagram of still another resource location in a signal processing method according to this application;
FIG. 6 is a schematic structural diagram of Embodiment 1 of a signal processing apparatus according to this application;
FIG. 7 is a schematic structural diagram of Embodiment 2 of a signal processing apparatus according to this application; and
FIG. 8 is a schematic structural diagram of Embodiment 3 of a signal processing apparatus according to this application.

### DESCRIPTION

It should be understood that the term "and/or" in this specification describes only an association relationship for describing associated objects and represents that three relationships may exist. For example, A and/or B may represent the following three cases: Only A exists, both A and B exist, and only B exists.

In the prior art, remote UE and relay UE establish a connection by using the following processes:
(1) A process in which the remote UE discovers the relay UE. The discovery process includes two models:
   In a first model, the relay UE sends a user equipment-to-network relay discovery announcement (UE-to-network relay discovery announcement) message. The remote UE receives the user equipment-to-network relay discovery announcement message, to discover the relay UE.
   In a second model, the remote UE sends a user equipment-to-network relay discovery solicitation (UE-to-network relay discovery solicitation) message. The relay UE receives the user equipment-to-network relay discovery solicitation message, to discover the remote UE. Then, the relay UE sends a user equipment-to-network relay discovery response (UE-to-network relay discovery response) message. The remote UE receives the user equipment-to-network relay discovery response message, to discover the relay UE.
(2) A process in which the remote UE and the relay UE establish a direct link.

The remote UE sends a direct communication request message. The relay UE receives the direct communication request message, and returns a direct connection request accept message or a direct connection request reject message to the remote UE. A sidelink communication message may include but is not limited to a direct communication request message, a direct connection request accept message, and a direct connection request reject message.

The remote UE needs to detect or receive, on all allocated resources, a message sent by the relay UE, to ensure that the remote UE receives, in a timely manner, the message sent by the relay UE. However, detecting or receiving, on all the allocated resources, the message sent by the relay UE causes relatively high power consumption of the remote UE. The remote UE is a device with a limited battery capability, for example, a battery capacity of the remote UE is relatively small, or a charging interval of the remote UE is relatively long. Therefore, the remote UE is usually required to consume less power.

Based on the foregoing problem, this application provides a signal processing method, to avoid excessively high power consumption caused when first user equipment such as remote UE detects and/or receives, on many resources, a second message sent by second user equipment such as relay UE, thereby reducing power consumption of the first user equipment.

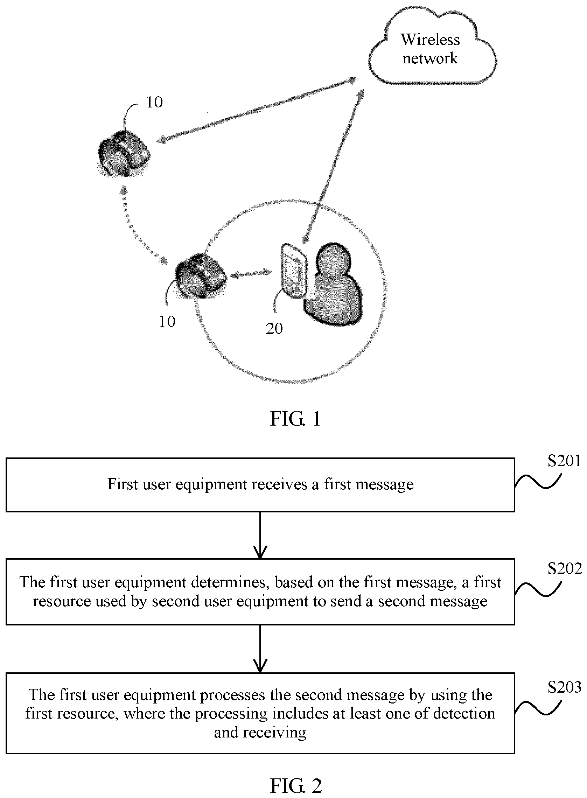

The following describes a possible system architecture in the embodiments of this application with reference to FIG. 1. FIG. 1 shows a network architecture applicable to the embodiments of this application. As shown in FIG. 1, the system architecture provided in the embodiments includes at least one first user equipment 10 and at least one second user equipment 20.

The second user equipment 20 is user equipment that provides a network access service, and may allow the first user equipment 10 to access a wireless network by using the second user equipment 20. Alternatively, the first user equipment 10 may directly access a wireless network.

The first user equipment 10 may be a wearable device, such as a smartwatch, a smart band, or smart glasses. Alternatively, the first user equipment 10 may be a machine-type communication (MTC) device or an Internet of Things (IoT) device, such as a smart electricity meter or a smart water meter.

The second user equipment 20 may be a wireless terminal. The wireless terminal may refer to a device that provides a user with voice and/or another service data connectivity, a handheld device with a wireless connection function, or another processing device connected to a wireless modem. The wireless terminal may communicate with one or more core networks through a radio access network (RAN). The wireless terminal may be a mobile terminal, such as a mobile phone (or referred to as a "cellular" phone) and a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communications service (PCS) phone, a cordless telephone set, a session initiation protocol (session initiation protocol, SIP) phone, a wireless local loop (WLL) station, or a personal digital assistant (PDA).

FIG. 1 shows an example in which the first user equipment 10 is a smart band and the second user equipment 20 is a mobile phone.

The following describes in detail the signal processing method provided in this application by using a detailed embodiment.

FIG. 2 is a schematic flowchart of Embodiment 1 of a signal processing method according to this application. The method may be performed by a signal processing apparatus. The apparatus may be first user equipment, and for example, may be a smart band shown in FIG. 1. Alternatively, the apparatus may be integrated into first user equipment. As shown in FIG. 2, the method includes the following steps.

S201. The first user equipment receives a first message.

The first message may be a sidelink discovery message, first synchronization information, or the like. The first synchronization information may be a synchronization signal and/or a master information block-sidelink (MIB-SL). However, this embodiment of this application is not limited thereto. The sidelink discovery message may be a UE-to-network relay discovery announcement message or a UE-to-network relay discovery response message.

Referring to the prior art, in a process in which remote UE discovers relay UE, the remote UE is the first user equipment, the relay UE is second user equipment, and the remote UE receives a sidelink discovery message sent by the relay UE. In this case, the first message is the sidelink discovery message. Alternatively, before the remote UE receives a sidelink message sent by the relay UE, the remote UE receives first synchronization information sent by the relay UE or another UE, so as to obtain information such as a timing. In this case, the first message is the first synchronization information. The sidelink message may be a sidelink discovery message or a sidelink communication message. The "another UE" may be understood as third user equipment by a person skilled in the art. In other words, the first message is sent by the third user equipment to the first user equipment.

It should be noted that first synchronization information received by the remote UE before the remote UE receives a sidelink discovery message sent by the relay UE is the same as or different from first synchronization information received by the remote UE before the remote UE receives a sidelink communication message sent by the relay UE. This is not limited in this application.

S202. The first user equipment determines, based on the first message, a first resource used by the second user equipment to send a second message.

In this step, still referring to the prior art, in the process in which the remote UE discovers the relay UE, the remote UE determines, based on the sidelink discovery message, the first resource used by the second user equipment to send the second message. Alternatively, the remote UE determines, based on the first synchronization information, the first resource used by the second user equipment to send the second message.

The second message may be any one or more of second synchronization information, a sidelink message, and sidelink control information (SCI) corresponding to the sidelink message. The second synchronization information may be a synchronization signal and/or a MIB-SL. The sidelink message may be a sidelink discovery message or a sidelink communication message.

Specifically, when the first message is the sidelink discovery message, the second message is any one or more of synchronization information, the sidelink communication message, and/or SCI corresponding to the sidelink communication message. When the first message is the first synchronization information, the second message is any one or more of the sidelink discovery message, SCI corresponding to the sidelink discovery message, the sidelink communication message, and SCI corresponding to the sidelink communication message. Alternatively, when the first message is the first synchronization information, the second message is the second synchronization information.

For example, after receiving the sidelink discovery message, the remote UE initiates a direct communication request message, and receives a response of the relay UE for the direct communication request message. The remote UE may determine, based on the received sidelink discovery message, a resource used for a sidelink communication message or corresponding SCI sent by the relay UE. When sending the sidelink communication message or the corresponding SCI, the relay UE may send synchronization information on a same subband. The remote UE may determine, based on the received sidelink discovery message, the first resource used for second synchronization information detected and/or received by the remote UE when the remote UE receives the sidelink communication message sent by the relay UE. Before receiving each of the sidelink discovery message and the sidelink communication message, the remote UE needs to obtain synchronization information. The remote UE may determine, based on first synchronization information, a resource for the sidelink discovery message sent by the relay UE. The remote UE may determine, based on the first synchronization information, the resource used for the sidelink communication message or the corresponding SCI sent by the relay UE. In addition, the remote UE may determine, based on the first synchronization information received when the remote UE receives the sidelink discovery message sent by the relay UE, the first resource used for the second synchronization information detected and/or received by the remote UE when the remote UE receives the sidelink communication message sent by the relay UE. In addition, when receiving messages on different subbands, the remote UE may need to receive synchronization information on the different subbands. Therefore, the first resource used for a subsequently received second synchronization message may be determined based on a second resource used for received first synchronization information corresponding to a received message.

The first resource may include a frequency domain resource and/or a time domain resource, or a resource pool. The frequency domain resource may be a physical resource block (PRB) or a subband. The time domain resource may be a subframe. The resource pool may include a group of time-frequency resources.

S203. The first user equipment processes the second message by using the first resource, where the processing includes at least one of detection and receiving.

Specifically, the first user equipment detects and/or receives the second message on the first resource.

It should be noted that the terms "first", "second", and the like in the embodiments of this application are intended to distinguish between similar objects, and are not necessarily intended to describe a specific sequence or sequence.

In this embodiment, the first user equipment determines, based on the first message, the first resource used by the second user equipment to send the second message, and detects and/or receives the second message on the first resource, so as to avoid excessively high power consumption caused when the first user equipment detects and/or receives the second message on many resources, thereby reducing power consumption of the first user equipment.

In addition, some remote UEs support relatively narrow bandwidth, resulting in a longer time consumed by the remote UEs to detect or receive a message sent by the relay UE. If the signal processing method provided in this application is used, because the first user equipment detects and/or receives the second message on the determined first resource, a time consumed by the first user equipment such as the remote UE to detect or receive a message sent by the second user equipment such as the relay UE can be further shortened in this application.

In addition, because some remote UEs support relatively narrow bandwidth, when the relay UE sends the second message on a frequency resource in a subframe, but the remote UE performs detection on another frequency resource, the remote UE may not receive the second message sent by the relay UE, resulting in an information loss. If the signal processing method provided in this application is used, because the first user equipment detects and/or receives the second message on the determined first resource, the information loss can be further avoided in this application.

In the foregoing embodiment, the first user equipment may determine, based on the first message in a plurality of implementations, the first resource used by the second user equipment to send the second message. The following provides description by using examples.

In an implementation, that the first user equipment determines, based on the first message, a first resource used by the second user equipment to send a second message may include: determining, by the first user equipment based on a second resource used for the first message, the first resource used by the second user equipment to send the second message.

The second resource may be any one or more of a subband, a PRB, a subframe, and a resource pool, and the first resource corresponds to the second resource and is one or more of a subband, a PRB, a subframe, and a resource pool. In other words, the first resource and the second resource may have a same type or different types.

A base station may configure one or more resources used for a sidelink communication message and a resource used for one sidelink discovery message that are in a correspondence. For example, when resource allocation of the relay UE is performed in a mode of scheduling by the base station, the base station schedules a resource used by the relay UE for sending a sidelink communication message and a resource for sending a sidelink discovery message that are in a correspondence. When resource allocation of the relay UE is performed in a mode of autonomous selection, the relay UE selects a resource for sending a sidelink communication message and a resource for sending a sidelink discovery message that are in a correspondence.

That a resource is a subband is used as an example. The relay UE may send synchronization information on a subband on which a sidelink message is sent. The remote UE may determine, based on the subband on which the received synchronization information is located, to receive the sidelink message on the subband, or receive, on the subband, SCI corresponding to the sidelink message. The sidelink message may be a sidelink discovery message or a sidelink communication message.

Alternatively, a subband on which the relay UE sends a sidelink message or corresponding SCI is configured by the base station. The remote UE may determine the configured subband based on synchronization information, and detect and/or receive, on the subband, the sidelink message or the corresponding SCI sent by the relay UE. The synchronization information may be sent by the relay UE or another UE.

The relay UE may further send a sidelink communication message or corresponding SCI on a subband on which a sidelink discovery message is sent. The remote UE may determine, based on the subband for the sidelink discovery message, to receive the sidelink communication message or the corresponding SCI on the subband.

The following separately provides detailed description by using examples in which both the second resource and the first resource are subbands, PRBs, or subframes.
1. Both the second resource and the first resource are subbands. The first user equipment determines, based on a subband used for the first message, a subband used by the second user equipment to send the second message. For example, the first user equipment determines, based on a subband used for a sidelink discovery message, a subband used by the second user equipment to send a sidelink communication message or corresponding SCI.

In a case, there is one or more offsets between the subband used for the first message and the subband used for the second message, and the offset may be 0 or any other integer value. The offset may be specified in a standard protocol, may be preconfigured, or may be configured by the base station. The first user equipment determines, based on the subband used for the first message and the offset, the subband used by the second user equipment to send the second message.

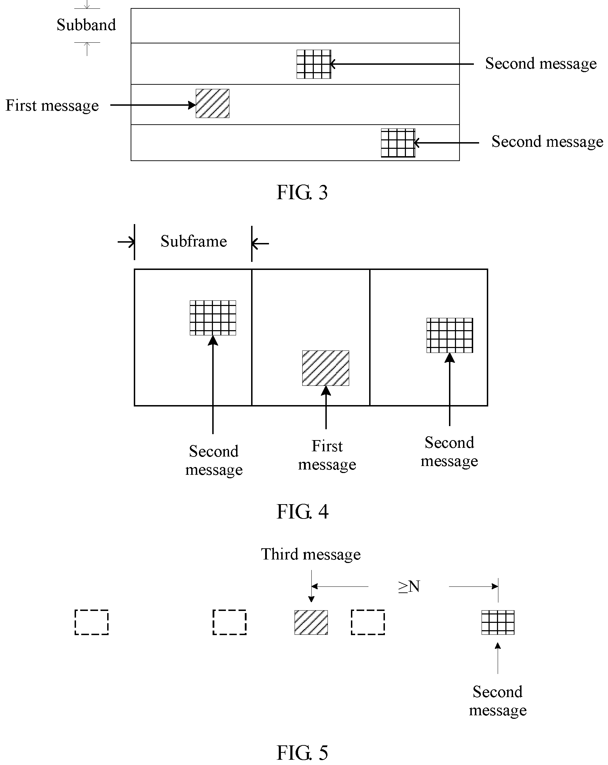

For example, if the offset is 1, it indicates that a subband index used for the second message is a subband index used for the first message plus 1 and/or minus 1. Referring to FIG. 3, a vertical direction represents different subbands, and each rectangle represents one subband. The subband used for the first message is shown as a box filled with slashes, and the subband used for the second message is shown as a box filled with grids. The subband used for the second message may be located above the subband used for the first message, and/or the subband used for the second message may be located below the subband used for the first message.

In another case, there is a mapping relationship between a subband used for the first message and a subband used for the second message. The mapping relationship may be one-to-one mapping, one-to-many mapping, or many-to-one mapping. The mapping relationship may be specified in a standard protocol, may be preconfigured, or may be configured by the base station. The first user equipment determines, based on the subband used for the first message and the mapping relationship, the subband used by the second user equipment to send the second message.

For example, there are a total of N subband indexes. When a subband index used for the first message is 1, a subband index used for the second message is N-1. When a subband index used for the first message is 2, a subband index used for the second message is N-2, and so on.

2. Both the second resource and the first resource are PRBs. The first user equipment determines, based on a PRB used for the first message, a PRB used by the second user equipment to send the second message. For example, the first user equipment determines, based on a PRB used for a sidelink discovery message, a PRB used by the second user equipment to send a sidelink communication message or corresponding SCI.

Referring to the description in which both the second resource and the first resource are the subbands, only the subband needs to be replaced with the PRB. Details are not described herein.

3. Both the second resource and the first resource are subframes. The first user equipment determines, based on a subframe used for the first message, a subframe used by the second user equipment to send the second message. For example, the first user equipment determines, based on a subframe used for a sidelink discovery message, a subframe used by the second user equipment to send a sidelink communication message or corresponding SCI.

Referring to the description in which both the second resource and the first resource are the subbands, only the subband needs to be replaced with the subframe. Details are not described herein.

For example, if an offset is 1, it indicates that a subframe number used for the second message is a subframe number used for the first message plus 1 and/or minus 1. Referring to FIG. 4, a vertical direction represents different subframes, and each rectangle represents one subframe. The subframe used for the first message is shown as a box filled with slashes, and the subframe used for the second message is shown as a box filled with grids. The subframe used for the second message may be located on a left side of the subframe used for the first message, and/or the subframe used for the second message may be located on a right side of the subframe used for the first message.

When the first resource and the second resource have different types, the following example is used for description.

For example, the first user equipment may determine, based on a PRB used for the first message, a subband used by the second user equipment to send the second message. Alternatively, the first user equipment may determine, based on a PRB used for the first message on a subband, a subband used by the second user equipment to send the second message. For example, one subband includes six PRBs. When the first PRB and the second PRB on the subband are used for the first message, it is determined that a subband used for the second message is a subband 1. When the third PRB and the fourth PRB on the subband are used for the first message, it is determined that a subband used for the second message is a subband 2. Alternatively, the first user equipment may determine, based on a subband used for the first message, a resource pool used by the second user equipment to send the second message. For example, when the first message is on the subband 1, it is determined that a resource pool used for the second message is a resource pool 1. When the first message is on the subband 2, it is determined that a resource pool used for the second message is a resource pool 2.

Based on this implementation, the determining, by the first user equipment based on a second resource used for the first message, the first resource used by the second user equipment to send the second message may include: determining, by the first user equipment based on a third message sent by the first user equipment and the second resource used for the first message, the first resource used by the second user equipment to send the second message. The third message may be a sidelink message and/or SCI corresponding to the sidelink message. The sidelink message may be a sidelink discovery message or a sidelink communication message. When the third message is a sidelink discovery message sent by the first user equipment, the sidelink discovery message may be a user equipment-to-network relay discovery solicitation message.

In a possible implementation, the third message may include an identifier of the first user equipment. The first user equipment determines, based on the identifier of the first user equipment and the second resource used for the first message, the first resource used by the second user equipment to send the second message. That both the first resource and the second resource are subbands is used as an example. The first user equipment determines, based on a subband used for the first message, that there may be N subbands used for the second message. The first user equipment determines, based on the identifier of the first user equipment, that a subband used by the second user equipment to send the second message is one of the N subbands. For example, if the N subbands that may be used for the second message are a subband 0, a subband 1, a subband 2, and a subband 3, that is, N is 4, and the identifier of the first user equipment is represented as ID, an index of the subband used for the second message is ID mod 4, where mod represents a modulo operation. For example, when a value of the ID is 0 or an integer multiple of 4, the index of the subband used for the second message is 0. If a value of the ID is 1 or 5, the index of the subband used for the second message is 1.

It should be noted that a user equipment identifier (including the identifier of the first user equipment and an identifier of the second user equipment) in this application may be a layer-2 identifier (layer-2 ID), or may be another identifier. This is not limited in this application.

In another possible implementation, the first user equipment determines, based on the second resource used for the first message and a third resource used by the first user equipment to send the third message, the first resource used by the second user equipment to send the second message.

For example, the first user equipment determines that a number of the first resource used by the second user equipment to send the second message is m+offset+P×i. P represents a period, m represents a number of the second resource used for the first message, "offset" is an offset, and i is an integer greater than or equal to 0. The formula indicates that the first user equipment determines that the first resource used by the second user equipment to send the second message may be a resource with an offset of "offset" resource numbers before and/or after the second resource m used for the first message, and is one of a plurality of resources repeated in the period P. If a number of the resource used by the first user equipment to send the third message is n, the first user equipment determines, based on n, that the resource used for the second message is one of the plurality of resources. For example, the resource used for the second message is the first resource whose resource number is greater than or equal to n+N in the plurality of resources, where N is a positive integer. As shown in FIG. 5, a horizontal direction represents different subframes, dashed-line boxes represent a plurality of subframes that may be used for the second message, a subframe used for the third message is shown as a box filled with slashes, and a subframe used for the second message is shown as a box filled with grids.

In another implementation, the first message may include indication information, and the indication information is used to determine the first resource used by the second user equipment to send the second message. In this implementation, that the first user equipment determines, based on the first message, a first resource used by the second user equipment to send a second message may include: determining, by the first user equipment, the first resource based on the indication information.

Specifically, the indication information may include the offset in the foregoing embodiment, or the indication information may include an absolute location of the first resource. For example, the indication information includes an offset corresponding to a subband, an offset corresponding to a subframe, an offset corresponding to a PRB, or an offset corresponding to a resource pool.

Similar to the foregoing embodiment, the first resource determined based on the indication information may include a plurality of subbands, subframes, PRBs, or resource pools. Therefore, the determining, by the first user equipment, the first resource based on the indication information may include: determining, by the first user equipment based on a third message sent by the first user equipment and the indication information, the first resource used by the second user equipment to send the second message. In other words, in a plurality of first resources determined based on the indication information, a specific first resource is further determined based on the third message sent by the first user equipment. The third message may be a sidelink message and/or sidelink control information SCI corresponding to the sidelink message, and the sidelink message is a sidelink discovery message or a sidelink communication message.

Specifically, the third message may include an identifier of the first user equipment. The first user equipment determines, based on the identifier of the first user equipment and the indication information, the first resource used by the second user equipment to send the second message. For example, the first user equipment determines, based on the indication information, a resource pool for sending the second message. The first user equipment determines, based on the identifier of the first user equipment, the first resource used by the second user equipment to send the second message in the determined resource pool.

Alternatively, the first user equipment determines, based on the indication information and a third resource that is used by the first user equipment to send the third message, the first resource used by the second user equipment to send the second message. For example, the first user equipment determines, based on the indication information, a resource pool for sending the second message. The first user equipment determines, based on the third resource used by the first user equipment to send the third message, the first resource used by the second user equipment to send the second message in the determined resource pool.

When the first message is a sidelink discovery message, the indication information may be included in a media access control protocol data unit (MAC PDU) or a physical protocol data unit (PHY PDU) of the sidelink discovery message. When the first message is synchronization information, the indication information may be included in a MIB-SL, or the indication information is a sidelink synchronization signal identifier (SLSSID) used by a synchronization signal, a scrambling code sequence used by a synchronization signal, or the like.

Based on the foregoing description, after the first user equipment receives the first message and before the first user equipment receives the second message sent by the second user equipment, the signal processing method may further include: sending, by the first user equipment, a sidelink message to the second user equipment. Herein, the sidelink message may be the foregoing third message.

The first message may include indication information, and the indication information is used to determine the first resource used by the second user equipment to send the second message. In this implementation, that the first user equipment determines, based on the first message, a first resource used by the second user equipment to send a second message may include: determining, by the first user equipment, the first resource based on an identifier of the second user equipment and the indication information.

In still another implementation, that the first user equipment determines, based on the first message, a first resource used by the second user equipment to send a second message may include: determining, by the first user equipment, an identifier of the second user equipment based on the first message; and determining, based on the identifier of the second user equipment, the first resource used by the second user equipment to send the second message. The first user equipment receives the first message sent by the second user equipment, and the first message may include the identifier of the second user equipment. The first user equipment determines, based on the identifier of the second user equipment, the first resource used by the second user equipment to send the second message. For example, that the first resource is a subband is used as an example. Subbands that may be used for the second message are four subbands in total: a subband 0, a subband 1, a subband 2, and a subband 3. If the identifier of the second user equipment is represented as ID, an index of a determined subband used for the second message is ID mod 4, where mod represents a modulo operation.

In yet another implementation, that the first user equipment determines, based on the first message, a first resource used by the second user equipment to send a second message may include: determining, by the first user equipment based on the first message and a user equipment (the first user equipment and/or the second user equipment) identifier, the first resource used by the second user equipment to send the second message.

Optionally, an identifier of the second user equipment may be determined by the first user equipment based on the first message or a fourth message sent by the second user equipment.

Further, an identifier of the first user equipment may be determined by the second user equipment based on a fifth message. The fifth message is sent by the first user equipment to the second user equipment. Further, the second user equipment determines, based on the identifier of the first user equipment, the first resource used by the second user equipment to send the second message.

Specifically, the first user equipment determines, based on the user equipment identifier and the second resource used for the first message, the first resource used by the second user equipment to send the second message. For example, that the first resource is a subband is used as an example. The first user equipment determines, based on a subband used for the first message, that there may be M subbands used by the second user equipment to send the second message. The first user equipment determines, based on the user equipment identifier, that a subband used by the second user equipment to send the second message is one of the M subbands. For example, if the subbands that may be used for the second message are a subband 0, a subband 1, a subband 2, and a subband 3, that is, M is 4, and the identifier of the second user equipment is represented as ID, an index of the subband used for the second message is ID mod 4, where mod represents a modulo operation.

Alternatively, the first user equipment determines, based on indication information included in the first message and the user equipment identifier, the first resource used by the second user equipment to send the second message. For example, that the first resource is a subband is used as an example. The first user equipment determines, based on the indication information, that there may be M subbands used for the second message, where M is an integer greater than or equal to 1. The first user equipment determines, based on the user equipment identifier, that a subband used by the second user equipment to send the second message is one of the M subbands. For example, if the subbands that may be used for the second message are a subband 0, a subband 1, a subband 2, and a subband 3, that is, M is 4, and the identifier of the second user equipment is represented as ID, an index of the subband used for the second message is ID mod 4, where mod represents a modulo operation.

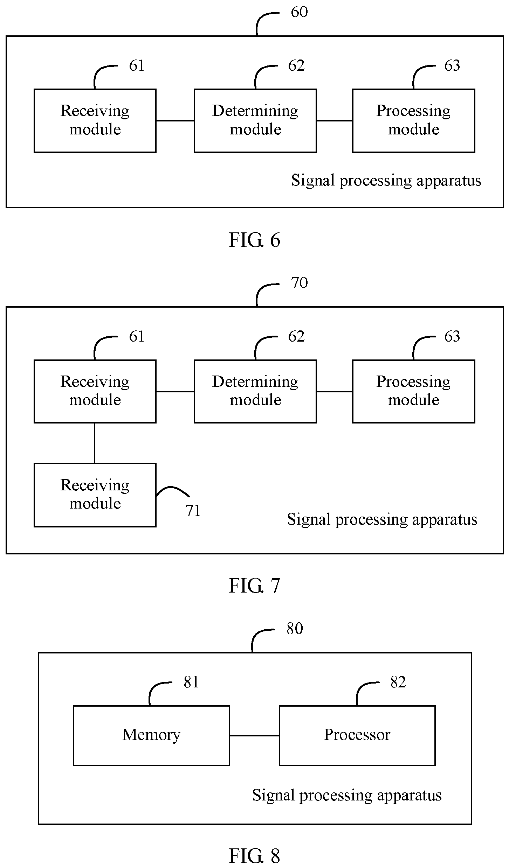

FIG. 6 is a schematic structural diagram of Embodiment 1 of a signal processing apparatus according to this application. The signal processing apparatus is first user equipment. As shown in FIG. 6, the signal processing apparatus 60 in this embodiment includes a receiving module 61, a determining module 62, and a processing module 63. The determining module 62 is separately coupled to the receiving module 61 and the processing module 63.

The receiving module 61 is configured to receive a first message. The determining module 62 is configured to determine, based on the first message, a first resource used by second user equipment to send a second message. The processing module 63 is configured to process the second message by using the first resource. The processing includes at least one of detection and receiving.

The apparatus in this embodiment may be configured to perform the signal processing method provided in the foregoing embodiments. Specific implementation principles and technical effects are similar, and details are not described herein.

In another embodiment, the determining module 62 may be specifically configured to determine, based on a second resource used for the first message, the first resource used by the second user equipment to send the second message.

In another embodiment, the first message may include indication information. The indication information may be used to determine the first resource used by the second user equipment to send the second message. The determining module 62 may be specifically configured to determine the first resource based on the indication information.

Optionally, when determining, based on the second resource used for the first message, the first resource used by the second user equipment to send the second message, the determining module 62 may be specifically configured to determine, based on a third message sent by the first user equipment and the second resource used for the first message, the first resource used by the second user equipment to send the second message.

Optionally, when determining the first resource based on the indication information, the determining module 62 may be specifically configured to determine, based on a third message sent by the first user equipment and the indication information, the first resource used by the second user equipment to send the second message.

The third message may be a sidelink message and/or SCI corresponding to the sidelink message. The sidelink message may be a sidelink discovery message or a sidelink communication message.

It should be noted that the second resource may be any one or more of a subband, a PRB, a subframe, and a resource pool. The first resource corresponds to the second resource and is one or more of a subband, a PRB, a subframe, and a resource pool. The first message may be a sidelink discovery message or first synchronization information. The first synchronization information may be a synchronization signal and/or a MIB-SL. The second message may be any one or more of second synchronization information, a sidelink message, and SCI corresponding to the sidelink message. The second synchronization information may be a synchronization signal and/or a MIB-SL. The sidelink message may be a sidelink discovery message or a sidelink communication message.

Optionally, the first message may be sent by the second user equipment or third user equipment.

Based on the structure shown in FIG. 6, as shown in FIG. 7, a signal processing apparatus 70 may further include a sending module 71. The sending module 71 is configured to send a sidelink message to the second user equipment after the receiving module 61 receives the first message. The sending module 71 is coupled to the receiving module 61.

The apparatus in this embodiment may be configured to perform the signal processing method provided in the foregoing embodiments. Specific implementation principles and technical effects are similar, and details are not described herein.

In addition, it should be noted and understood that division of the modules of the foregoing signal processing apparatus is merely logical function division. There may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in this application may be integrated into one processing unit, or each of the units may exist alone physically, or two or more units may be integrated into one unit. The integrated unit may be implemented in a form of hardware, or may be implemented in a form of hardware in addition to a software functional unit.

It should be further noted that, in the foregoing embodiment, the receiving module and the sending module may be implemented by using a transceiver. Alternatively, the receiving module is implemented by using an independent receiver, and the sending module is implemented by using an independent receiver. The determining module and the processing module in the foregoing embodiment may be implemented by using a processor with a data processing function.

FIG. 8 is a schematic structural diagram of Embodiment 3 of a signal processing apparatus according to this application. Referring to FIG. 8, the signal processing apparatus 80 includes a memory 81 and a processor 82. The memory 81 is coupled to the processor 82.

The memory 81 is configured to store a program instruction, and the processor 82 is configured to invoke the program instruction in the memory 81 to implement the foregoing method embodiments.

The apparatus in this embodiment may be configured to perform the signal processing method provided in the foregoing embodiments. Specific implementation principles and technical effects are similar, and details are not described herein.

It should be understood that the processor mentioned in this application may be a central processing unit (CPU), a general-purpose processor, a digital signal processor (DSP), an application-specific integrated circuit (ASIC), a field-programmable gate array (FPGA) or another programmable logic device, a transistor logic device, a hardware component, or a combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

An implementation of this application further provides a program, and when being executed by a processor, the program is used to perform the signal processing method in the foregoing embodiments. An implementation of this application further provides a program product, for example, a computer readable storage medium, including the program described above. An implementation of this application further provides a computer readable storage medium. The computer readable storage medium stores an instruction, and when the instruction runs on the computer, the computer is enabled to perform the signal processing methods in the foregoing embodiments.

## Claims

1. A signal processing method, comprising:
receiving (S201), by first user equipment (10), a first message;
determining (S202), by the first user equipment (10) based on the first message, a first resource used by second user equipment (20) to send a second message; wherein the determining, by the first user equipment (10) based on the first message, a first resource used by second user equipment (20) to send a second message comprises:
determining, by the first user equipment (10) based on a second resource used for the first message, the first resource used by the second user equipment (20) to send the second message; and
processing (S203), by the first user equipment (10), the second message by using the first resource, wherein the processing comprises at least one of detection and receiving the second message.

2. The method according to claim 1, wherein the first message comprises indication information, the indication information is used to determine the first resource used by the second user equipment (20) to send the second message, and the determining, by the first user equipment (10) based on the first message, a first resource used by the second user equipment (20) to send a second message comprises:
determining, by the first user equipment (10), the first resource based on the indication information.

3. The method according to claim 1, wherein the determining, by the first user equipment (10) based on a second resource used for the first message, the first resource used by the second user equipment (20) to send the second message comprises:
determining, by the first user equipment (10) based on a third message sent by the first user equipment (10) and the second resource used for the first message, the first resource used by the second user equipment (20) to send the second message.

4. The method according to claim 2, wherein the determining, by the first user equipment (10), the first resource based on the indication information comprises:
determining, by the first user equipment (10) based on a third message sent by the first user equipment (10) and the indication information, the first resource used by the second user equipment (20) to send the second message.

5. The method according to claim 3 or 4, wherein the third message is a sidelink message and/or sidelink control information SCI corresponding to the sidelink message, and the sidelink message is a sidelink discovery message or a sidelink communication message.

6. The method according to any one of claims 1 to 5, wherein the second resource is any one or more of a subband, a physical resource block PRB, a subframe, and a resource pool, and the first resource corresponds to the second resource and is one or more of a subband, a PRB, a subframe, and a resource pool.

7. The method according to any one of claims 1 to 6, wherein the first message is a sidelink discovery message or first synchronization information, and the first synchronization information is a synchronization signal and/or a master information block-sidelink MIB-SL.

8. The method according to any one of claims 1 to 7, wherein the second message is any one or more of second synchronization information, a sidelink message, and sidelink control information SCI corresponding to the sidelink message, the second synchronization information is a synchronization signal and/or a master information block-sidelink MIB-SL, and the sidelink message is a sidelink discovery message or a sidelink communication message.

9. The method according to any one of claims 1 to 8, wherein after the receiving, by first user equipment (10), a first message, the method further comprises:
sending, by the first user equipment (10), a sidelink message to the second user equipment (20).

10. A signal processing apparatus (60), wherein the signal processing apparatus (60) is first user equipment (10), and the signal processing apparatus (60) comprises:
a receiving module (61), configured to receive a first message;
a determining module (62), configured to determine, based on the first message, a first resource used by second user equipment to send a second message, wherein the determining module (62) is specifically configured to:
determine, based on a second resource used for the first message, the first resource used by the second user equipment (20) to send the second message; and
a processing module (63), configured to process the second message by using the first resource, wherein the processing comprises at least one of detection and receiving the second message.

11. The apparatus (60) according to claim 10, wherein the first message comprises indication information, the indication information is used to determine the first resource used by the second user equipment (20) to send the second message, and the determining module (62) is specifically configured to:
determine the first resource based on the indication information.

12. The apparatus (60) according to claim 10, wherein when determining, based on the second resource used for the first message, the first resource used by the second user equipment (20) to send the second message, the determining module (62) is specifically configured to:
determine, based on a third message sent by the first user equipment (10) and the second resource used for the first message, the first resource used by the second user equipment (20) to send the second message.

13. The apparatus (60) according to claim 11, wherein when determining the first resource based on the indication information, the determining module (62) is specifically configured to:
determine, based on a third message sent by the first user equipment (10) and the indication information, the first resource used by the second user equipment (20) to send the second message.

## Patentansprüche

1. Signalverarbeitungsverfahren, umfassend:
Empfangen (S201) einer ersten Nachricht durch ein erstes Benutzergerät (10);
Bestimmen (S202) einer von einem zweiten Benutzergerät (20) zum Senden einer zweiten Nachricht genutzten ersten Ressource durch das erste Benutzergerät (10) basierend auf der ersten Nachricht; wobei das Bestimmen einer von einem zweiten Benutzergerät (20) zum Senden einer zweiten Nachricht genutzten ersten Ressource durch das erste Benutzergerät (10) basierend auf der ersten Nachricht Folgendes umfasst:
Bestimmen der von dem zweiten Benutzergerät (20) zum Senden der zweiten Nachricht genutzten ersten Ressource durch das erste Benutzergerät (10) basierend auf einer für die erste Nachricht genutzten zweiten Ressource; und
Verarbeiten (S203) der zweiten Nachricht durch das erste Benutzergerät (10) unter Nutzung der ersten Ressource, wobei das Verarbeiten umfasst, dass die zweite Nachricht detektiert und/oder empfangen wird.

2. Verfahren nach Anspruch 1, wobei die erste Nachricht Anzeigeinformationen umfasst, die Anzeigeinformationen dazu genutzt werden, um die von dem zweiten Benutzergerät (20) zum Senden der zweiten Nachricht genutzte erste Ressource zu bestimmen, und das Bestimmen einer von dem zweiten Benutzergerät (20) zum Senden einer zweiten Nachricht genutzten ersten Ressource durch das erste Benutzergerät (10) basierend auf der ersten Nachricht Folgendes umfasst:
Bestimmen der ersten Ressource basierend auf den Anzeigeinformationen durch das erste Benutzergerät (10).

3. Verfahren nach Anspruch 1, wobei das Bestimmen der von dem zweiten Benutzergerät (20) zum Senden der zweiten Nachricht genutzten ersten Ressource durch das erste Benutzergerät (10) basierend auf einer für die erste Nachricht genutzten zweiten Ressource Folgendes umfasst:
Bestimmen der von dem zweiten Benutzergerät (20) zum Senden der zweiten Nachricht genutzten ersten Ressource durch das erste Benutzergerät (10) basierend auf einer durch das erste Benutzergerät (10) gesendeten dritten Nachricht und der für die erste Nachricht genutzten zweiten Ressource.

4. Verfahren nach Anspruch 2, wobei das Bestimmen der ersten Ressource basierend auf den Anzeigeinformationen durch das erste Benutzergerät (10) Folgendes umfasst:
Bestimmen der von dem zweiten Benutzergerät (20) zum Senden der zweiten Nachricht genutzten ersten Ressource durch das erste Benutzergerät (10) basierend auf einer durch das erste Benutzergerät (10) gesendeten dritten Nachricht und den Anzeigeinformationen.

5. Verfahren nach Anspruch 3 oder 4, wobei es sich bei der dritten Nachricht um eine "Sidelink"-Nachricht und/oder mit der "Sidelink"-Nachricht korrespondierende "Sidelink"-Steuerinformationen SCI und bei der "Sidelink"-Nachricht um eine "Sidelink"-Erkennungsnachricht oder eine "Sidelink"-Kommunikationsnachricht handelt.

6. Verfahren nach einem der Ansprüche 1 bis 5, wobei die zweite Ressource eines oder mehrere von einem Teilband, einem physischen Ressourcenblock PRB, einem Unterrahmen und einem Ressourcenpool ist und die erste Ressource mit der zweiten Ressource korrespondiert und eines oder mehrere von einem Teilband, einem PRB, einem Unterrahmen und einem Ressourcenpool ist.

7. Verfahren nach einem der Ansprüche 1 bis 6, wobei es sich bei der ersten Nachricht um eine "Sidelink"-Erkennungsnachricht oder erste Synchronisationsinformationen und bei den ersten Synchronisationsinformationen um ein Synchronisationssignal und/oder einen "Master Information Block-Sidelink" MIB-SL handelt.

8. Verfahren nach einem der Ansprüche 1 bis 7, wobei es sich bei der zweiten Nachricht um eines oder mehrere von zweiten Synchronisationsinformationen, einer "Sidelink"-Nachricht und mit der "Sidelink"-Nachricht korrespondierenden "Sidelink"-Steuerinformationen SCI, bei den zweiten Synchronisationsinformationen um ein Synchronisationssignal und/oder einen "Master Information Block-Sidelink" MIB-SL und bei der "Sidelink"-Nachricht um eine "Sidelink"-Erkennungsnachricht oder eine "Sidelink"-Kommunikationsnachricht handelt.

9. Verfahren nach einem der Ansprüche 1 bis 8, wobei das Verfahren nach dem Empfangen einer ersten Nachricht durch das erste Benutzergerät (10) ferner Folgendes umfasst:
Senden einer "Sidelink"-Nachricht durch das erste Benutzergerät (10) an das zweite Benutzergerät (20).

10. Signalverarbeitungsvorrichtung (60), wobei die Signalverarbeitungsvorrichtung (60) ein erstes Benutzergerät (10) ist und die Signalverarbeitungsvorrichtung (60) Folgendes umfasst:
ein Empfangsmodul (61), das konfiguriert ist, um eine erste Nachricht zu empfangen;
ein Bestimmungsmodul (62), das konfiguriert ist, um basierend auf der ersten Nachricht eine von einem zweiten Benutzergerät zum Senden einer zweiten Nachricht genutzte erste Ressource zu bestimmen, wobei das Bestimmungsmodul (62) speziell für Folgendes konfiguriert ist:
Bestimmen der von dem zweiten Benutzergerät (20) zum Senden der zweiten Nachricht genutzten ersten Ressource basierend auf einer für die erste Nachricht genutzten zweiten Ressource; und
ein Verarbeitungsmodul (63), das konfiguriert ist, um die zweite Nachricht unter Nutzung der ersten Ressource zu verarbeiten, wobei das Verarbeiten umfasst, dass die zweite Nachricht detektiert und/oder empfangen wird.

11. Vorrichtung (60) nach Anspruch 10, wobei die erste Nachricht Anzeigeinformationen umfasst, die Anzeigeinformationen dazu genutzt werden, um die von dem zweiten Benutzergerät (20) zum Senden der zweiten Nachricht genutzte erste Ressource zu bestimmen, und das Bestimmungsmodul (62) speziell für Folgendes konfiguriert ist: Bestimmen der ersten Ressource basierend auf den Anzeigeinformationen.

12. Vorrichtung (60) nach Anspruch 10, wobei das Bestimmungsmodul (62) speziell für Folgendes beim Bestimmen der von dem zweiten Benutzergerät (20) zum Senden der zweiten Nachricht genutzten ersten Ressource basierend auf der für die erste Nachricht genutzten zweiten Ressource konfiguriert ist:
Bestimmen der von dem zweiten Benutzergerät (20) zum Senden der zweiten Nachricht genutzten ersten Ressource basierend auf einer durch das erste Benutzergerät (10) gesendeten dritten Nachricht und der für die erste Nachricht genutzten zweiten Ressource.

13. Vorrichtung (60) nach Anspruch 11, wobei das Bestimmungsmodul (62) beim Bestimmen der ersten Ressource basierend auf den Anzeigeinformationen speziell für Folgendes konfiguriert ist:
Bestimmen der von dem zweiten Benutzergerät (20) zum Senden der zweiten Nachricht genutzten ersten Ressource basierend auf einer durch das erste Benutzergerät (10) gesendeten dritten Nachricht und den Anzeigeinformationen.

## Revendications

1. Procédé de traitement du signal, comportant :
la réception (S201), par un premier équipement (10) d'utilisateur, d'un premier message ;
la détermination (S202), par le premier équipement (10) d'utilisateur d'après le premier message, d'une première ressource utilisée par un deuxième équipement (20) d'utilisateur pour émettre un deuxième message ; la détermination, par le premier équipement (10) d'utilisateur d'après le premier message, d'une première ressource utilisée par un deuxième équipement (20) d'utilisateur pour émettre un deuxième message comportant :
la détermination, par le premier équipement (10) d'utilisateur d'après une deuxième ressource utilisée pour le premier message, de la première ressource utilisée par le deuxième équipement (20) d'utilisateur pour émettre le deuxième message ; et
le traitement (S203), par le premier équipement (10) d'utilisateur, du deuxième message en utilisant la première ressource, le traitement comportant une détection et/ou la réception du deuxième message.

2. Procédé selon la revendication 1, le premier message comportant des informations d'indication, les informations d'indication étant utilisées pour déterminer la première ressource utilisée par le deuxième équipement (20) d'utilisateur pour émettre le deuxième message, et la détermination, par le premier équipement (10) d'utilisateur d'après le premier message, d'une première ressource utilisée par le deuxième équipement (20) d'utilisateur pour émettre un deuxième message comportant :
la détermination, par le premier équipement (10) d'utilisateur, de la première ressource d'après les informations d'indication.

3. Procédé selon la revendication 1, la détermination, par le premier équipement (10) d'utilisateur d'après une deuxième ressource utilisée pour le premier message, de la première ressource utilisée par le deuxième équipement (20) d'utilisateur pour émettre le deuxième message comportant :
la détermination, par le premier équipement (10) d'utilisateur d'après un troisième message émis par le premier équipement (10) d'utilisateur et la deuxième ressource utilisée pour le premier message, de la première ressource utilisée par le deuxième équipement (20) d'utilisateur pour émettre le deuxième message.

4. Procédé selon la revendication 2, la détermination, par le premier équipement (10) d'utilisateur, de la première ressource d'après les informations d'indication comportant : la détermination, par le premier équipement (10) d'utilisateur d'après un troisième message émis par le premier équipement (10) d'utilisateur et les informations d'indication, de la première ressource utilisée par le deuxième équipement (20) d'utilisateur pour émettre le deuxième message.

5. Procédé selon la revendication 3 ou 4, le troisième message étant un message de liaison latérale et/ou des informations de commande de liaison latérale, SCI, correspondant au message de liaison latérale, et le message de liaison latérale étant un message de découverte de liaison latérale ou un message de communication en liaison latérale.

6. Procédé selon l'une quelconque des revendications 1 à 5, la deuxième ressource étant une ou plusieurs ressources quelconques parmi une sous-bande, un bloc de ressources physiques, PRB, une sous-trame et un groupement de ressources, et la première ressource correspondant à la deuxième ressource et étant une ou plusieurs ressources parmi une sous-bande, un PRB, une sous-trame et un groupement de ressources.

7. Procédé selon l'une quelconque des revendications 1 à 6, le premier message étant un message de découverte de liaison latérale ou des premières informations de synchronisation, et les premières informations de synchronisation étant un signal de synchronisation et/ou un bloc principal d'informations-liaison latérale MIB-SL.

8. Procédé selon l'une quelconque des revendications 1 à 7, le deuxième message étant un ou plusieurs messages quelconques parmi des deuxièmes informations de synchronisation, un message de liaison latérale, et des informations de commande de liaison latérale, SCI, correspondant au message de liaison latérale, les deuxièmes informations de synchronisation étant un signal de synchronisation et/ou un bloc principal d'informations-liaison latérale MIB-SL, et le message de liaison latérale étant un message de découverte de liaison latérale ou un message de communication en liaison latérale.

9. Procédé selon l'une quelconque des revendications 1 à 8, le procédé comportant en outre, après la réception d'un premier message par un premier équipement (10) d'utilisateur : l'envoi, par le premier équipement (10) d'utilisateur, d'un message de liaison latérale au deuxième équipement (20) d'utilisateur.

10. Appareil (60) de traitement du signal, l'appareil (60) de traitement du signal étant un premier équipement (10) d'utilisateur, et l'appareil (60) de traitement du signal comportant :
un module (61) de réception, configuré pour recevoir un premier message ;
un module (62) de détermination, configuré pour déterminer, d'après le premier message, une première ressource utilisée par un deuxième équipement d'utilisateur pour émettre un deuxième message, le module (62) de détermination étant spécifiquement configuré pour :
déterminer, d'après une deuxième ressource utilisée pour le premier message, la première ressource utilisée par le deuxième équipement (20) d'utilisateur pour émettre le deuxième message ; et
un module (63) de traitement, configuré pour traiter le deuxième message en utilisant la première ressource, le traitement comportant une détection et/ou la réception du deuxième message.

11. Appareil (60) selon la revendication 10, le premier message comportant des informations d'indication, les informations d'indication étant utilisées pour déterminer la première ressource utilisée par le deuxième équipement (20) d'utilisateur pour émettre le deuxième message, et le module (62) de détermination étant spécifiquement configuré pour :
déterminer la première ressource d'après les informations d'indication.

12. Appareil (60) selon la revendication 10, le module (62) de détermination étant spécifiquement configuré, lors de la détermination, d'après la deuxième ressource utilisée pour le premier message, de la première ressource utilisée par le deuxième équipement (20) d'utilisateur pour émettre le deuxième message, pour :
déterminer, d'après un troisième message émis par le premier équipement (10) d'utilisateur et la deuxième ressource utilisée pour le premier message, la première ressource utilisée par le deuxième équipement (20) d'utilisateur pour émettre le deuxième message.

13. Appareil (60) selon la revendication 11, le module (62) de détermination étant spécifiquement configuré, lors de la détermination de la première ressource d'après les informations d'indication, pour :
déterminer, d'après un troisième message émis par le premier équipement (10) d'utilisateur et les informations d'indication, la première ressource utilisée par le deuxième équipement (20) d'utilisateur pour émettre le deuxième message.
